# EUROPÄISCHE PATENTANMELDUNG

(11) **EP 1 944 153 A1**
(43) Veröffentlichungstag der Anmeldung: **16.07.2008**
(21) Anmeldenummer: 08000509.3
(22) Anmeldetag: 11.01.2008
(51) Int. Cl.: B29C 65/20, B29C 65/78

(54) **Vorrichtung zum Verschweißen von Rahmenprofilen**

(30) Priorität: 12.01.2007 DE 102007002574
(71) Anmelder: KMW-Engineering GmbH, 08248 Klingenthal (DE)
(72) Erfinder: Karbstein, André, 08248 Klingenthal (DE)
(74) Vertreter: Grünecker, Kinkeldey, Stockmair & Schwanhäusser Anwaltssozietät

(57) **Zusammenfassung**

Die vorliegende Erfindung betrifft eine Vorrichtung zum Verschweißen von Rahmenprofilen aus Kunststoff in einem Winkel, mit einer Anschlageinrichtung für die Rahmenprofile, die wenigstens eine für verschiedene, zwischen den zu verschweißenden Rahmenprofilen auszubildende Winkel verstellbare Schweißzulage (4) aufweist. Die Schweißzulage ist in Kombination mit einer relativ zu dieser verlagerbaren Anschlagleiste (7) vorgesehen.

## Beschreibung

Die vorliegende Erfindung betrifft eine Vorrichtung zum Verschweißen von Rahmenprofilen aus Kunststoff in einem Winkel, mit einer Anschlageinrichtung für die Rahmenprofile, die wenigstens eine für verschiedene, zwischen den zu verschweißenden Rahmenprofilen auszubildende Winkel winkelverstellbare Schweißzulage aufweist.

Die Herstellung von Fensterrahmen, Blendrahmen oder dergleichen auf Kunststoffbasis erfolgt in der Regel durch Verschweißen von auf Gehrung geschnittenen Rahmenprofilstücken. Dabei werden die zu verschweißenden Profile zunächst in einer Vorrichtung ausgerichtet und eingespannt. Anschließend werden die Gehrungsflächen mit einem dazwischenfahrenden Heizspiegel erwärmt. Nach Ablauf der Schmelzzeit fährt der Heizspiegel aus der Gehrung, und die angewärmten Gehrungsflächen werden zusammengepresst oder gestaucht und so miteinander verschweißt.

Für das Ausrichten der zu verschweißenden Profile an der Schweißstelle nutzt man eine Anschlageinrichtung, in welche die zu verschweißenden Profilstücke so eingebracht werden können, dass ihre Gehrungsflächen direkt aneinander angrenzen und die Außenseiten der zu verschweißenden Profilstücke an Anschlagleisten anliegen. Werden Rahmenprofilstücke in einem Winkel von 90° miteinander verschweißt, sind die Anschlagleisten bei im Stand der Technik bekannten Schweißvorrichtungen meist fest auf einem Ablagetisch für die Profilstücke positioniert.

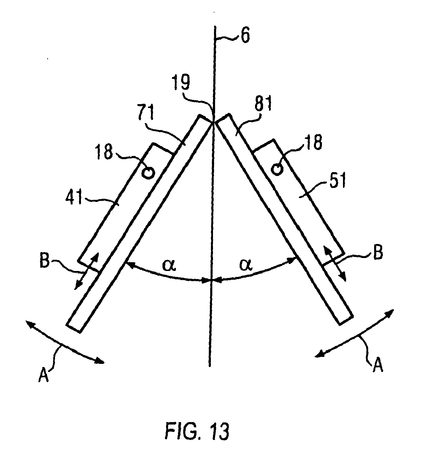

Da es jedoch häufig erforderlich ist, Profilstücke auch in anderen, von 90° verschiedenen Winkeln miteinander zu verschweißen, gibt es Vorrichtungen, bei welchen die Anschlagleisten für die zu verschweißenden Profilstücke mittels einer Verstelleinrichtung entsprechend dem Gehrungswinkel der Profilstücke verstellbar sind. Ein Grundprinzip einer solchen im Stand der Technik verwendeten Verstelleinrichtung ist beispielsweise in Figur 13 dargestellt.

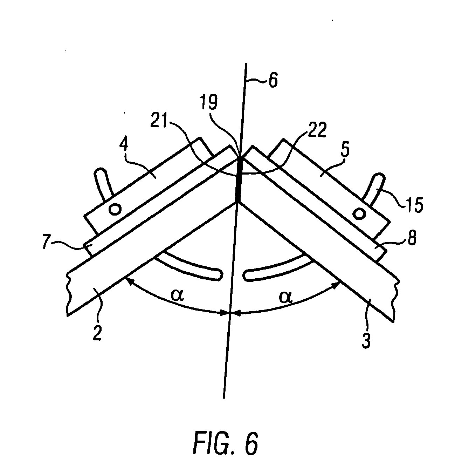

Die aus dem Stand der Technik bekannte Verstelleinrichtung weist spiegelsymmetrisch zu einer Nullkante 6 angeordnete Schweißzulagen 41, 51 auf. An den Schweißzulagen 41, 51 sind Anschlagleisten 71, 81 in Richtung der zu verschweißenden Profilelemente, die in Figur 6 nicht dargestellt sind, angebracht. Die Schweißzulagen 41, 51 sind über Lager 18, welche jeweils einen festen Drehpunkt für die Schweißzulagen 41, 51 ausbilden, entsprechend der mit dem Pfeil A gekennzeichneten Bewegungsrichtung drehbar. So kann zwischen den Schweißzulagen 41, 51 ein Winkel 2α der Größe 2α eingestellt werden, der dem einzustellenden Winkel zwischen den zu verschweißenden Profilelementen entspricht. Der Winkel kann beispielsweise mit Hilfe einer sich auf einem Ablagetisch für die verschweißenden Profilelemente befindenden Skala eingestellt werden und erfolgt bei den bekannten Verstelleinrichtungen manuell.

Des Weiteren können die Schweißzulagen 41, 51 entlang der durch den Pfeil B gekennzeichneten Bewegungsrichtung lateral verschoben werden. Eine solche Lateralverschiebung ist notwendig, da die Anschlagleisten 71, 81 an der Nullkante 6 stets aneinander angrenzen müssen. Durch die Drehung der Schweißzulagen 41, 51 um die jeweils festen Drehpunkte 18 ändert sich der Abstand der Anschlagleisten 71, 81 voneinander, so dass diese Differenz durch die Lateralverschiebung der Schweißzulagen 41, 51 ausgeglichen werden muss. Aufgrund dessen ist die Einstellung eines Schweißwinkels mit der im Stand der Technik bekannten Verstelleinrichtung relativ langwierig.

Die Druckschrift DE 30 19 600 A1 beinhaltet eine Vorrichtung zum Verschweißen von Kunststoffprofilen. Hierzu sind auf einer Ebene zwei Stützplatten vorgesehen, die jeweils Führungsbahnen aufweisen, die in kreisbogenförmigen Öffnungen drehbar beweglich sind. Somit können zwischen den Führungsbahnen beliebige Winkel bis zu einem Einfallwinkel von 180° zwischen den zu verschweißenden Kunststoffprofilen eingestellt werden.

Ferner ist aus der Druckschrift DE 100 33 225 A1 ein Verfahren und eine Vorrichtung zum Verschweißen von drei Rahmenteilen an zwei Schweißstellen bekannt, wobei die Schweißstellen gleichzeitig unter beliebigen Winkeln verschweißt werden können. Hierzu nutzt man zueinander verschwenkbare Spanntische, welche in halbkreisförmigen Führungen geführt werden.

Es ist die Aufgabe der vorliegenden Erfindung, eine Vorrichtung zum Verschweißen von Rahmenprofilen aus Kunststoff in einem Winkel zur Verfügung zu stellen, bei welcher der zwischen den verschweißenden Rahmenprofilen auszubildende Winkel schnell und leicht und dennoch mit hoher Genauigkeit eingestellt werden kann.

Diese Aufgabe wird erfindungsgemäß durch eine Vorrichtung mit den Merkmalen des Anspruches 1 gelöst.

Die Verbindung der Schweißzulage mit einer relativ zu dieser, vorzugsweise lateral beweglichen Anschlagleiste (bzw. einer in der Beschreibung noch näher ausgeführten "Zungenplatte", als ein Ausführungsbeispiel einer derartigen bewegbaren Anschlagleiste darstellt), ermöglicht einerseits eine rasche und einfache Winkeleinstellbarkeit der Schweißzulage und damit eine rasche und zuverlässige Positionierung der zu verschweißenden Rahmenprofile in einem gewünschten Winkel zueinander. Diese Positionierung ist außerdem leicht reproduzierbar.

Ferner wird durch die bewegliche Zuordnung der Anschlagleiste (bzw. der nachstehend noch näher beschriebenen Zungenplatte) zu der Schweißzulage sichergestellt, dass unabhängig von dem zwischen den zu verschweißenden Rahmenprofilen gebildeten Winkel ein Verbindungspunkt der Winkel bzw. ein Eck-Abstützungspunkt der Anschlagleisten (Zungenplatten) zur Anlage der Rahmenprofile sich unabhängig vom eingestellten Winkel, unter dem die Rahmenprofile zu verschweißen sind, stets präzise entlang einer Linie (im Rahmen der vorliegenden Anmeldung als "Null-Linie" bezeichnet) bewegt, d.h. in einer Radiusbetrachtung mit einem äußeren Eckverbindungspunkt der Anschlagleisten (Zungenplatten) sich unabhängig vom eingestellten Winkel stets an derselben Stelle befindet. Mit anderen Worten liegt der durch die beiden zusammenwirkenden Anschlagleisten (Zungenplatten) gebildete Scheitelpunkt des "Anschlagwinkels" für die Rahmenprofile stets auf der Winkelhalbierenden, und zwar unabhängig vom gewählten Winkel, gewissermaßen "automatisch", also ohne aufwendige Einstellarbeiten und Rüstzeiten. Dies ist besonders auch für eine Kleinserien- und Einzelfertigung von Kunststofffenstern mit unterschiedlicher Rahmenkonfiguration vorteilhaft.

Auf diese Weise wird eine verbesserte Eckfestigkeit hinsichtlich der Schweißverbindung für die Kunststoff-Rahmenprofile erreicht, da die alte Kraft unmittelbar in den Eckbereich der aneinander stoßenden Rahmenprofile eingeleitet werden kann.

Außerdem findet unabhängig vom Winkel, unter dem die Rahmenprofile zu verschweißen sind, eine stets gleichmäßige Begrenzung der Schweißnaht statt, ohne dass hierfür besondere Maßnahmen seitens einer Bedienungsperson ergriffen werden müssen.

Mit der Erfindung ist daher auch ein höherer Automatisierungs- oder Halbautomatisierungsgrad der Fertigung erreichbar.

Vorzugsweise ist die Schweißzulage (bzw. ein Grundkörper der Schweißzulage) und/oder die Anschlagleiste (bzw. die Zungenplatte) in jeweils zumindest einer zugehörigen Führung geführt, vorzugsweise ist die Schweißzulage (bzw. der Grundköper) in einer bogenförmigen Führung geführt, während die Anschlagleiste (bzw. die Zungenplatte) vorzugsweise in einer bewegungssteuernden Führungskurve geführt und auf diese Weise auch relativ lateral gehalten an der Schweißzulage bewegbar ist. Vorzugsweise weist diese Führungskurve einen Wendepunkt auf.

Auf diese Weise ist einerseits eine zuverlässige Winkeleinstellbarkeit der Schweißzulage und deren Verschwenkung um eine einen Eckbereich der zu verschweißenden Rahmenprofile markierende Vertikalachse zur raschen Einstellung verschiedener Verschweißwinkel für die miteinander zu verbindenden Rahmenprofile vorgesehen, während andererseits der eigentliche Eckpunkt, gebildet durch die zusammenwirkende innere vertikale Eckkante der Anschlagleisten (Zungenplatten) exakt in Abhängigkeit vom Winkel, den diese bzw. die Schweißzulage einnehmen, entlang einer Geraden sich bewegt, wenn verschiedene Winkel einzustellen sind, so dass eine hohe Genauigkeit in der Winkelbildung sowie im Anschlagbereich der miteinander winklig zu verschweißenden Rahmenprofile aus Kunststoff gegeben ist.

Entlang der bogenförmigen Führung kann die Schweißzulage so geführt werden, dass sie schnell und einfach an eine dem zwischen den zu verschweißenden Rahmenprofilen auszubildenden Winkel entsprechende Position gebracht werden kann.

In Abkehr von dem im Stand der Technik benutzten festen Drehpunkt für die Schweißzulage nutzt die vorliegende Erfindung einen "virtuellen Drehpunkt" (gebildet durch die Eckkanten der Anschlagleisten). Das hat den Vorteil, dass die Schweißzulage bei einer Veränderung des zwischen den zu verschweißenden Rahmenprofilen auszubildenden Winkels sich stets in der richtigen Anschlagposition für die Rahmenprofile (ohne Nachjustieren) befinden.

Entsprechend einer vorteilhaften Ausführungsform der Erfindung weist die bogenförmige Führung eine in einer Auflage für die Profilelemente vorgesehene Nut auf, in welche wenigstens ein, an der Schweißzulage vorgesehenes Führungselement eingreift. Hierdurch wird eine exakte und stabile Führung entlang der Führungsnut gewährleistet.

Vorzugsweise weist das Führungselement wenigstens eine in der Nut geführte Führungsrolle auf. Durch das Vorsehen der Führungsrolle kann die Schweißzulage besonders leicht entlang der Führungsnut bewegt werden. Verschleißerscheinungen können dadurch minimiert werden.

Gemäß einer weiteren Ausführungsform der Erfindung weist das Führungselement ein in der Nut geführtes Kugellager auf. Eine solche Anordnung ist besonders geeignet, wenn die Führungsnut einen relativ langen Verfahrweg aufweist, wobei die Führungsrollen des Kugellagers die Schweißzulage sicher und dennoch leicht in der Nut führen.

Gemäß einer vorteilhaften Weiterbildung der Erfindung ist die Schweißzulage (bzw. der Grundkörper derselben) in zwei voneinander beabstandeten bogenförmigen Führungen gelagert. Hierdurch kann eine sehr sichere Führung der Schweißzulage, beispielsweise an zwei ausreichend weit voneinander beabstandeten Stellen der Schweißzulage, ermöglicht werden.

Gemäß einer günstigen Ausführungsform der Erfindung ist die Anschlagleiste mit einer Magnetverbindung an der Schweißzulage gehalten. Somit ist es möglich, die Anschlagleiste entlang der Schweißzulage zu bewegen, wobei dennoch die Anschlagleiste mit der Schweißzulage verbunden bleibt.

Entsprechend einem bevorzugten Ausführungsbeispiel der Erfindung weist die Anschlagleiste (die Zungenplatte) eine Anschlagkante für eine Außenkante eines Rahmenprofils und eine Begrenzungskante für eine Innenkante des Rahmenprofils auf. Somit kann ein besonders stabiler Anschlag des Rahmenprofils an der Anschlagleiste ermöglicht werden.

Vorzugsweise weist die Anschlageinrichtung zwei, im gleichen Winkel zu einer Nullkante vorgesehene verstellbare Schweißzulagen auf. Entsprechend können die Rahmenprofile im gleichen Abstand zu der Nullkante in der Anschlageinrichtung positioniert werden.

Hierbei ist es von Vorteil, dass an jeder der Schweißzulagen eine lateral an der jeweiligen Schweißzulage bewegliche und dem jeweiligen Rahmenprofil zugewandte Anschlagleiste (Zungenplatte) vorgesehen ist, wobei die Anschlagleisten an der Nullkante aneinander grenzen. Somit kann nicht nur ein guter Anschlag für die beiden zu verschweißenden Rahmenprofile zur Verfügung gestellt werden, sondern es wird auch ermöglicht, dass durch das kontinuierliche Aneinandergrenzen der Anschlagleisten eine Schweißwulst beim Schweißen gering gehalten und damit entsprechende Nacharbeiten (Putzen) reduziert werden können.

Weitere, vorteilhafte Ausführungsformen der Erfindung sind in den übrigen Unteransprüchen dargestellt.

Die Erfindung wird nachstehend anhand von bevorzugten Ausführungsbeispielen und zugehörigen Zeichnungen näher erläutert. In diesen zeigen:
- Figur 1: eine Vorrichtung zum Verschweißen von Rahmenprofilen aus Kunststoff und eines ersten Ausführungsbeispieles der vorliegenden Erfindung in einer perspektivischen Halbdarstellung einer Anschlageinrichtung,
- Figur 2: die Vorrichtung nach Fig. 1 in der Draufsicht mit einer ersten Winkeleinstellung einer Schweißzulage der Anschlageinrichtung,
- Figur 3: eine Darstellung wie Fig. 2, jedoch mit einer zweiten Winkeleinstellung der Position der Schweißzulage,
- Figur 4: eine Darstellung wie Figur 2, jedoch mit einer dritten Winkeleinstellung der Position der Schweißzulage,
- Figur 5: schematische Ausführungsbeispiele von Führungselementen, die in der Vorrichtung nach Fig. 1 zum Führen der Schweißzulage in bogenförmigen Führungen verwendet sind, (Halbdarstellung) in Draufsicht,
- Figur 6: die Anschlagvorrichtung nach Fig. 1 (schematische Teildarstellung), in Draufsicht,
- Figuren 7 bis 9: Ausführungsbeispiele eines Profils einer Anschlagleiste einer Vorrichtung nach Fig. 1 und eingelegtem Rahmenprofil, jeweils in schematischer Schnittdarstellung,
- Fig. 10: eine perspektivische Darstellung einer Hälfte der Anschlageinrichtung im wesentlichen in der Art von Fig. 1, jedoch für ein weiteres Ausführungsbeispiel der Erfindung mit einem Einstellwinkel (Gehrungswinkel) für die zu verschweißenden Rahmenprofile von ca. 130°,
- Fig. 11: eine Darstellung gemäß Fig. 10, jedoch für einen Gehrungswinkel zwischen den zu verschweißenden Kunststoff-Rahmenprofilen von ca. 70°,
- Fig. 12: eine Ansicht der Anschlageinrichtung entsprechend Fig. 11, jedoch in einer Ansicht von einer Rückseite der Schweißzulage, und
- Figur 13: schematisch eine verstellbare Anschlageinrichtung für eine Schweißvorrichtung zum Verschweißen von Rahmenprofilen aus Kunststoff gemäß dem Stand der Technik zeigt.

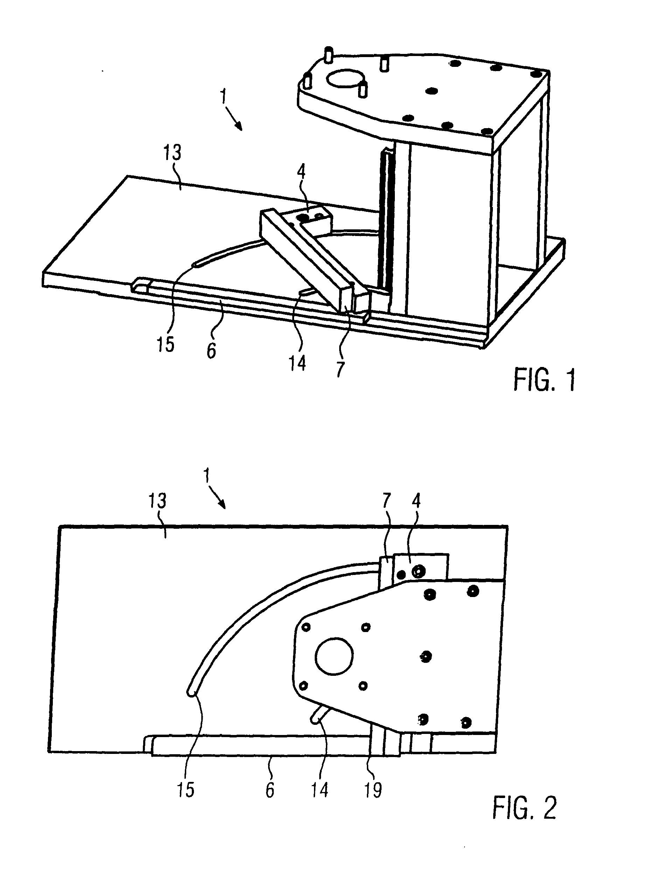

Figur 1 zeigt schematisch in perspektivischer Darstellung und halbseitig einen Grundaufbau einer Anschlageinrichtung 1 einer Vorrichtung zum Verschweißen von Rahmenprofilen aus Kunststoff, wobei die (hier nicht gezeigten) Rahmenprofile in einem Winkel zueinander angeordnet und unter diesem Winkel (Gehrungswinkel) miteinander verschweißt werden. Solche Kunststoff-Schweißvorrichtungen sind insbesondere für die Herstellung von Rahmen für Kunststofffenster vorgesehen, ohne in der Anwendung hierauf beschränkt zu sein, vielmehr können auch andere insbesondere rahmen- oder stangenförmige Profilteile unter einem jeweils einstellbaren Winkel auf diese Weise miteinander verbunden, insbesondere verschweißt werden.

Figur 1 zeigt die Anschlageinrichtung 1 hälftig, die spiegelsymmetrisch durch einen entsprechend aufgebauten zweiten Teil mit einem weiteren Anschlag für ein zweites Rahmenprofil komplettiert ist. Fig. 1 zeigt daher praktisch nur die Anschlageinrichtung hinsichtlich der Aufnahme für ein (einziges) Rahmenprofil, während der entsprechend aufgebaute, gegenüberliegende Teil der entlang einer Längsseite der in Fig. 1 dargestellten, hälftigen Anschlageinrichtung in spiegelsymmetrischer Anordnung vorgesehen ist (hier nicht dargestellt). (In diesem Zusammenhang wird zur Erläuterung auf Figur 6 verwiesen, die in schematischer Draufsicht die Anschlageinrichtung 1 zur Gänze zeigt.

Im übrigen ist auch der weitere Aufbau der Gesamtvorrichtung zum Verschweißen der Rahmenprofile nicht dargestellt, vielmehr kann eine Auflage 13 z.B. als Arbeitstisch der Gesamtvorrichtung (der auf einem hier nicht dargestellten Rahmen mit der eigentlichen Schweißvorrichtung ruht) verstanden werden, wobei auf diese Auflage die zu verschwei-ßenden Rahmenprofile aufgelegt werden. In Fig. 1 ist z.B. für ein linksseitiges Rahmenprofil die Anschlageinrichtung 1 gezeigt, wohingegen auf die hier nicht dargestellte, zweite Hälfte in spiegelsymmetrischer Ausbildung ein weiteres Rahmenprofil zum Verschweißen unter einem vorgegebenen Winkel aufgelegt wird. Das Rahmenprofil ist in Fig. 1 nicht dargestellt.

Der Arbeitstisch bzw. die Auflage 13 besitzt zumindest eine Führungsnut 15, im vorliegenden Fall vorzugsweise zwei bogenförmige Führungsnuten 14 und 15, die jeweils bogen- bzw. parabelförmig in der Auflageplatte 13 eingebracht sind. Dabei weist entsprechend einer Drehposition für eine nachstehend noch im Einzelnen erläuterten Schweißzulage 4 die Führungsnut 14 einen kleineren Radius bzw. einen kleineren Bogen als die Führungsnut 15 auf, wobei eine Parabel- oder Bogenform der Führungsnuten 14, 15 gleich oder verschieden sein kann, ggf. auch in Abhängigkeit davon, ob die in die Führungsnuten 14, 15 eingreifenden Führungselemente, (vgl. nachfolgende Erläuterung) fest oder gleitbeweglich mit der zugehörigen Schweißzulage 4 verbunden bzw. gekoppelt sind.

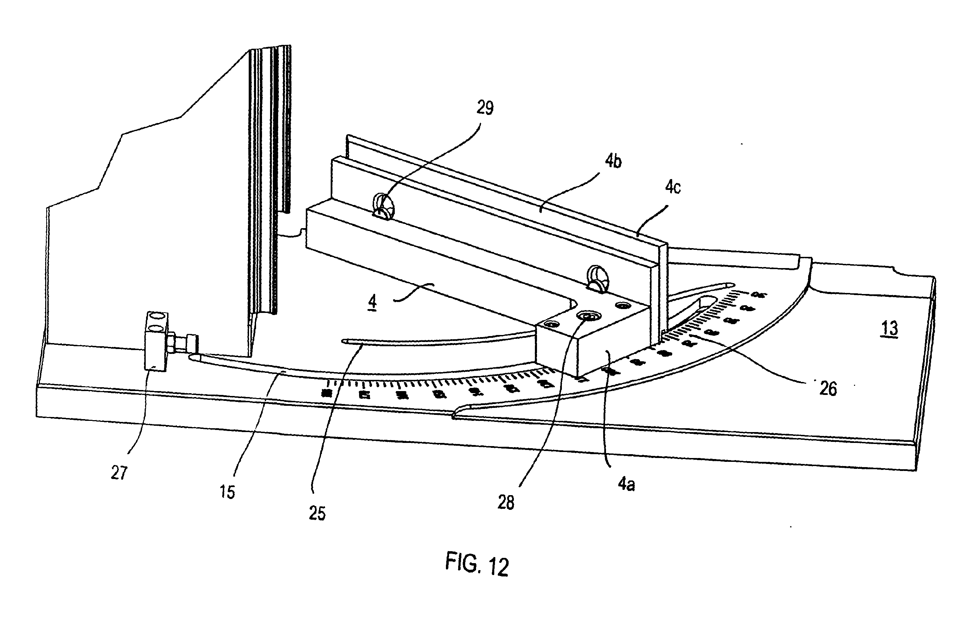

Es wäre jedoch auch möglich, ausschließlich eine bogenförmige Führungsnut 15 zu verwenden. Dies ist beispielsweise im Ausführungsbeispiel nach Fig. 12 gezeigt.

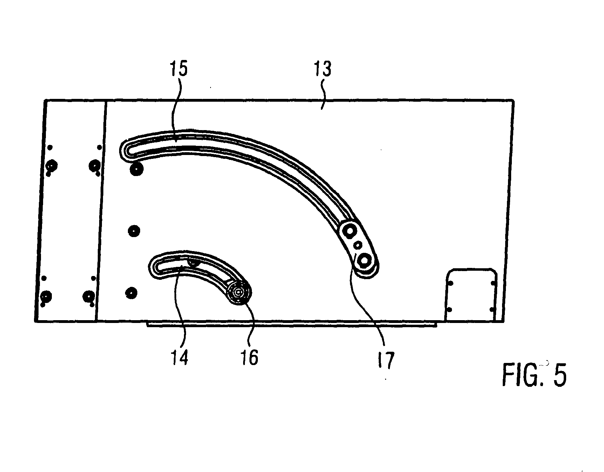

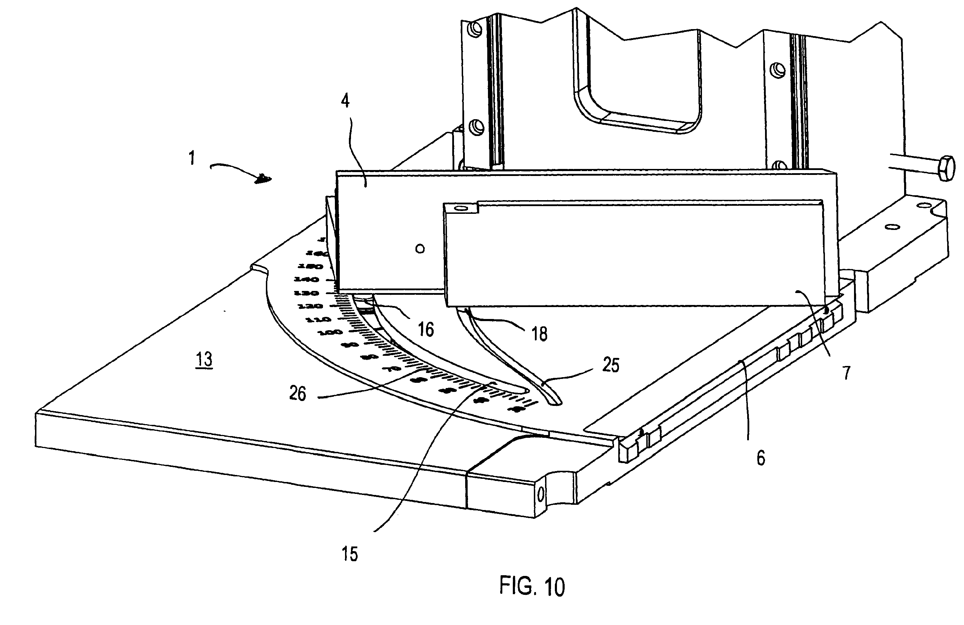

In die Führungsnuten 14, 15 ragen jeweils Führungselemente 16, 17, wie sie in Fig. 5 bzw. auch für das zweite Ausführungsbeispiel in Fig. 10 (Bezugszeichen 18) dargestellt sind, hinein.

In dem in Figur 1 schematisch dargestellten Ausführungsbeispiel ist die Schweißzulage 4 in Form einer winkligen Leiste ausgebildet. Sie kann jedoch in anderen Ausführungsformen der Erfindung auch als einfache Leiste oder in einer anderen für die Definition eines Anschlags geeigneten Form ausgebildet sein.

Die Schweißzulage 4 weist an einer dem zu verschweißenden Rahmenprofil zugewandten Seite eine Seitenkante auf, an welcher eine Anschlagleiste 7 relativbeweglich festgelegt ist. Die Anschlagleiste 7 ist in dem gezeigten Beispiel mit der Schweißzulage 4 mittels einer Magnetverbindung verbunden.

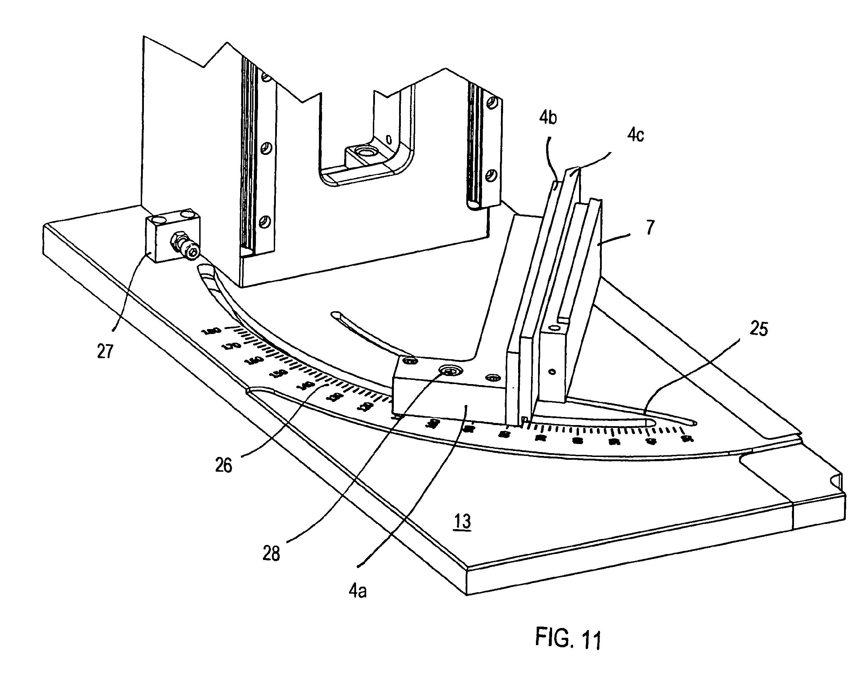

Wie in Fig. 11 gezeigt, kann aber auch ein mechanischer ("zungenförmiger") Eingriff der dort gezeigten als Zungenplatte ausgebildeten Anschlagleiste 7 an der Schweißzulage 4 vorgesehen werden, um diesen Halt zu erzeugen.

Durch die Magnetverbindung oder den zungenförmigen Eingriff kann die Anschlagleiste (bzw. die Zungenplatte) ausreichend sicher an der Schweißzulage 4 gehalten werden und dennoch in Abhängigkeit von der Position der Schweißzulage 4 sich lateral entlang einer Seite der Schweißzulage 4 verschieben.

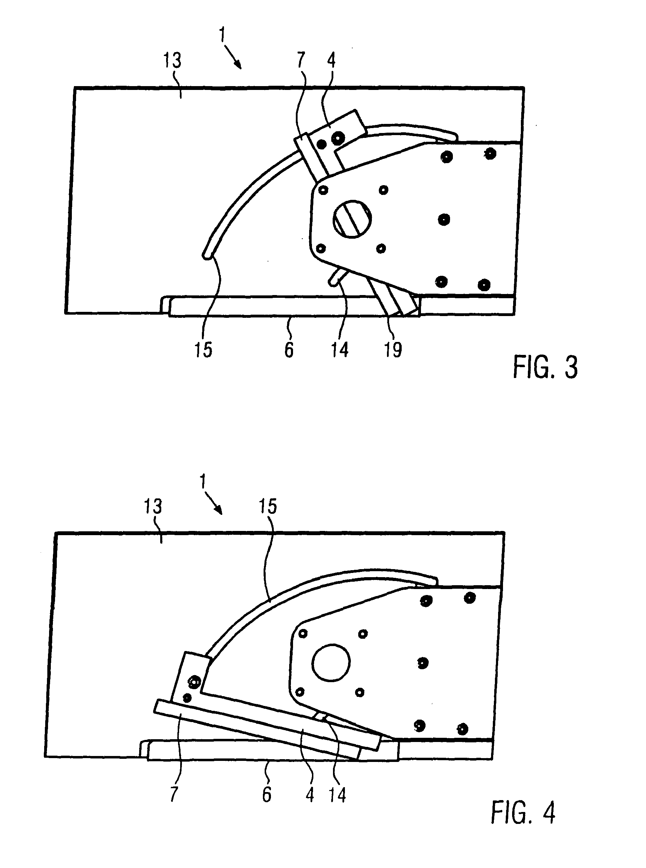

Wie er die Figuren 2, 3 und 4 zeigen, kann auf diese Weise die Anschlagleiste 7 (bzw. die Zungenplatte) in Abhängigkeit von der Positionierung der Schweißzulage 4 eine veränderte Stellung an der Schweißzulage 4 einnehmen, während ständig gewährleistet ist, dass eine vertikale Eckkante 19 der Anschlagleiste 7 (bzw. der Zungenplatte) genau an einer Nullkante 6 der Vorrichtung angrenzt bzw. mit dieser übereinstimmt. Auch die Schweißzulage 4 weist diese Eckkante auf.

Da die jeweils spiegelsymmetrisch ausgebildete, in den Figuren 1 bis 4 nicht gezeigte Anschlagleiste 8 und die zugehörige Schweißzulage 5 ebenfalls mit ihrer Eckkante 19 an der Nullkante 6 angrenzt, liegen die beiden vertikalen Eckkanten 19, 19 aneinander, so dass eine optimale Begrenzungswinkel an der Spitze (Ecke) der Anschlageinrichtung 1 für die zu verschweißenden Rahmenprofile erhalten wird.

Während in den Figuren 1 bis 4 jeweils zwei Führungsnuten 14, 15 gezeigt sind, kann in anderen Ausführungsformen der Erfindung auch nur eine Nut oder auch mehr als zwei Nuten zur Führung der Schweißzulage 4,5 verwendet werden.

Figur 5 zeigt schematisch die in die Führungsnuten 14, 15 der in den Figuren 1 bis 4 gezeigten Anschlageinrichtung 1 eingreifenden Führungselemente 16, 17. In die Führungsnut 14 greift eine Rolle 16 ein, welche zu einer besonders guten und leicht beweglichen Führung der Schweißzulage 4,5 in der Nut 14 beiträgt.

In die Führungsnut 15 sind zwei miteinander verbundene Rollen 18 in Form eines Kugellagers eingebracht, die Schweißzulage 4,5 in der Nut 15 beweglich führen.

Figur 6 zeigt schematisch eine Anschlageinrichtung 1 mit zwei aneinander angrenzenden Rahmenprofilen 2, 3, welche durch die Schweißzulage 4,5 und die daran angebrachten Anschlagleisten 7, 8 an einer bestimmten Position in der Schweißvorrichtung der vorliegenden Erfindung positioniert sind. Der zwischen den Rahmenprofilen 2, 3 aufgespannte Winkel der Größe 2α entspricht dem zwischen den Schweißzulage 4,5 bzw. den Anschlagleisten 7, 8 aufgespannten Winkel der Größe 2α. Wie in Figur 6 zu sehen, grenzen die Anschlagleisten 7, 8 an der Spitze der aneinanderliegenden Gehrungen 20, 21 der Rahmenprofile 2, 3 aneinander, um die sich beim Schweißen ausbildende Schweißwulst zu begrenzen. Dies wird dadurch gewährleistet, dass die Eckkanten 19 der Anschlagleisten 7, 8 bzw. der Schweißzulagen 4,5 bei jedem der an der Anschlageinrichtung 1 eingestellten Winkel α an der Nullkante 6 anliegen.

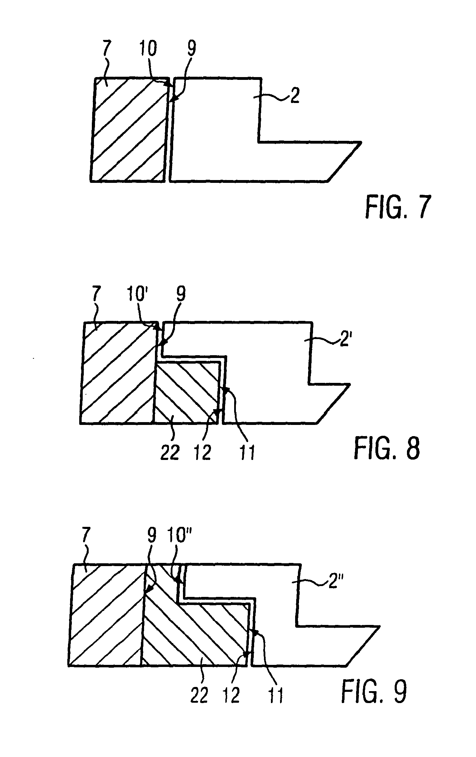

Figur 7 zeigt schematisch einen möglichen Querschnitt einer Anschlagleiste 7 mit einem daran anliegenden Rahmenprofil 2. In dem gezeigten Beispiel kann eine gerade Außenkante 10 direkt an einer geraden Anschlagkante 9 der Anschlagleiste 7 anliegen.

Figur 8 zeigt schematisch eine Anschlagleiste 7 mit einer daran vorgesehenen Flügelbeilage 22 und einem daran angrenzenden Rahmenprofil 2'. Während eine Außenkante 10' des Rahmenprofils 2' an einer ebenen Anschlagkante 9 der Anschlagleiste 7 anliegt, liegt eine Innenkante 12 des Rahmenprofils 2' an einer durch die Flügelbeilage 22 definierten Begrenzungskante 11 an. Somit kann ein guter Anschlag des Rahmenprofils 2' an der Anschlagleiste 7 gewährleistet werden.

Figur 9 zeigt schematisch eine weitere Variante einer Anschlagleiste 7 im Querschnitt, wobei an der Anschlagleiste 7 eine Flügelbeilage 23 vorgesehen ist. Die Flügelbeilage 23 liegt mit ihrer Außenkante an der Anschlagkante 9 der Anschlagleiste 7 an. An der Flügelbeilage 23 liegt ein Rahmenprofil 2" an. Da die Flügelbeilage 23 in Form eines Winkels ausgebildet ist, kann sowohl eine Außenkante 10" des Rahmenprofils 2" als auch eine Innenkante 12 an einer Begrenzungskante 11 der Flügelbeilage 23 anliegen. Somit wird ein sicherer Halt des Rahmenprofils 2" in der Schweißposition gewährleistet.

Die Anschlagleisten 7, 8 besitzen zudem die Funktion von Schweißwulstbegrenzungen, so dass die Größe von sich beim Schweißen ausbildenden Schweißwülsten durch die enge Anlage des jeweiligen Rahmenprofils 2, 3 an den Anschlagleiste 7, 8 eingeschränkt wird.

Ein weiteres Ausführungsbeispiel der Erfindung ist in den Figuren 10 bis 12 dargestellt, das sich von dem Ausführungsbeispiel nach Fig. 1 und 6 im wesentlichen dadurch unterscheidet, dass die Bewegungssteuerung der Anschlagleiste 7 im Verhältnis zur Winkelposition der zugehörigen Schweißzulage 4 in einer definierten, zwangsgesteuerten Weise durch Eingriff eines an einer Unterseite der Anschlagleiste 7 vorgesehenen Eingriffselementes 18 in eine separate Führungsnut 25 erfolgt. In Verbindung mit einer Winkelbewegung zur Einstellung eines Gehrungswinkels für den Schweißvorgang durch die Schweißzulage 4 erfolgt eine Zwangssteuerung der Lateralbewegung der Anschlagleiste 7 kurvengesteuert durch die Führungsnut 25 und zwar derart, dass die vertikale Eckkante 19 stets praktisch auf bzw. unmittelbar an der Nullkante 6 verbleibt, d.h. sich längs derselben bei unterschiedlicher Winkeleinstellung der Schweißzulage 4 bewegt.

Unabhängig von der eingestellten Winkelposition der Schweißzulage 4, die mittels auf der Auflage 13 vorgesehenen Winkelgradeinteilung 26 leicht möglich und reproduzierbar gewählt werden kann, nimmt die Anschlagleiste 7 stets eine Position ein, die dazu führt, dass die Außenkanten der miteinander zu verschweißenden Profilrahmen stets auf oder unmittelbar an der Nullkante 6 zusammenstoßen und in dieser Position verschweißt werden, und zwar ohne dass es hierzu noch besonderer Einstellarbeiten durch eine Bedienperson bedarf.

In den übrigen Figuren 11 und 12 ist das nämliche Ausführungsbeispiel für eine andere Winkelposition der Schweißzulage 4 bei ca. 70° und entsprechend veränderter Relativposition der Anschlagleiste 7 gezeigt. Mit 27 ist ein hinterer Anschlag für die Schweißzulage 4 bezeichnet. Im übrigen entspricht das Ausführungsbeispiel den vorerläuterten Prinzipien.

In dem zweiten Ausführungsbeispiel wie auch in Fig. 2 des ersten Ausführungsbeispieles sind die Feststellmittel (vorzugsweise Schnellspannschraube) zur Arretierung der gewählten Winkelposition der Schweißzulage 4 mit 28 bezeichnet.

Darüber hinaus verdeutlicht insbesondere Fig. 12 (Rückansicht der Schweißzulage 4), dass die Schweißzulage 4 mehrteilig aufgebaut ist und einen L-förmig ausgebildeten Grundkörper 4a, und mit diesem Grundkörper 4a verbundene Leisten 4b und 4c aufweist, die einen raschen Austausch derselben ermöglichen. An der Leiste 4c ist die Zungenplatte angeordnet, welche die bewegbare Anschlagleiste 7 dieses Ausführungsbeispieles bildet.

Es kann allerdings in Modifikationen der vorliegenden Erfindung auch möglich sein, nur z. B. die Schweißzulage 4 in der Führungsnut 15 zu führen, die entsprechende Winkelbewegung oder Winkelposition der Schweißzulage 4 aber über eine entsprechende Übertragungsvorrichtung in eine Gleitbewegungs-Positionseinstellung der Zungenplatte (der Anschlagleiste 7) an der Schweißzulage 4 zu übersetzen, d.h. für die Schweißzulage 4 auf eine separate Führungsnut 25 zu verzichten, gleichwohl eine Zwangsführung der Zungenplatte (der Anschlagleiste 7) abgeleitet von der Winkelposition der Schweißzulage 4 über eine interne Einstellvorrichtung (Kopplung zwischen Schweißzulage 4 und Zungenplatte 7) zu gewährleisten.

Wesentlich ist, dass die vertikale Eckkante 19 stets in Übereinstimmung mit bzw. in unmittelbarer angrenzender Position zu der Nullkante 6 verbleibt.

Ggf. kann auch nur die Anschlagleiste 7 in einer Führungsnut 25 geführt sein, wohingegen die Schweißzulage 4 in Abhängigkeit von der Position der Anschlagleiste 7 durch diese lagebestimmt ist.

Ein wichtiger Aspekt der Erfindung besteht also darin, dass die vertikale Eckkante 19 stets entlang der Null-Linie 6 bewegt wird, wobei vorzugsweise eine Zwangsführung in den Relativpositionen zwischen der Zungenplatte (der Anschlagleiste 7) und der Schweißzulage 4 bzw. umgekehrt stattfindet.

In den vorerläuterten Ausführungsbeispielen greifen die mit den Schweißzulagen 4,5 bzw. Zungenplatte 7,8 (der Anschlagleisten 7,8) versehenen Führungs- oder Eingriffselemente 16 bis 18 jeweils in die zugehörigen Führungsnuten 14, 15 bzw. 25 ein. Selbstverständlich können auch andere Eingriffsanordnungen zwischen den Führungsnuten 14, 15, 25 und den Eingriffselementen 16 bis 18 gewählt werde, z.B. in kinematischer Umkehr mit Ausnehmung in den Schweißzulagen 4,5 bzw. Zungenplatten 7,8 mit Eingriffsvorsprüngen auf der zugehörigen Abstütz- oder Gleitfläche wie Auflage 13. Es ist auch möglich, die gesteuerte Lateralverschiebung der Zungenplatten 7,8 relativ zu den jeweiligen Schweißzulagen 4,5 ohne zusätzliche Eingriffsnut 25, sondern direkt über eine Positionssteuerung der jeweiligen Zungenplatte 7,8 an der zugehörigen Schweißzulage 4,5 zu bewirken, derart, dass eine Winkelposition der Schweißzulage 4,5 direkt in eine Lateralposition der zugehörigen, an der Schweißzulage 4,5 gelagerten Zungenplatte 7,8 umgesetzt wird, oder umgekehrt.

Durch die Erfindung sind leicht und reproduzierbar unterschiedliche Gehrungswinkel zwischen Kunststoff-Rahmenprofile einstellbar, um diese miteinander zu verschweißen.

Das vorerläuterte Prinzip kann der Fachmann aber auch leicht auf andere Fertigungsaufgaben übertragen, in denen Profilelemente auf Gehrung miteinander zu verbinden sind. Die Erfindung ist daher nicht auf das Verschweißen und auch nicht auf die Verbindung von Kunststoff-Profilen beschränkt, sondern überall dort anwendbar, wo vorfertigbare Gehrungsverbindungen von Materialien erforderlich sind.

## Patentansprüche

1. Vorrichtung zum Verschweißen von Rahmenprofilen aus Kunststoff unter einem Winkel, mit einer Anschlageinrichtung, die wenigstens eine winkeleinstellbare Schweißzulage (4,5) aufweist, **dadurch gekennzeichnet, dass** in Kombination mit der Schweißzulage (4) wenigstens eine, relativ zu dieser bewegliche Anschlagleiste (7,8,22,23) vorgesehen ist.

2. Vorrichtung nach Anspruch 1, **dadurch gekennzeichnet, dass** die Schweißzulage (4,5) und/oder die bewegliche Anschlagleiste (7,8,22,23) in jeweils zumindest einer zugehörigen Führung geführt ist.

3. Vorrichtung nach Anspruch 2, **dadurch gekennzeichnet, dass** die Schweißzulage (4,5) in zumindest einer bogenförmigen Führung (14, 15) geführt ist.

4. Vorrichtung nach Anspruch 2 oder 3, **dadurch gekennzeichnet, dass** die Anschlagleiste (7,8,22,23) lateral beweglich an der Schweißzulage (4,5) gelagert ist.

5. Vorrichtung nach Anspruch 4, **dadurch gekennzeichnet, dass** die Anschlagleiste (4,5) mittels einer bewegungssteuernden Führungskurve (25) geführt ist.

6. Vorrichtung Anspruch 5, **dadurch gekennzeichnet, dass** die Führungskurve eine Führungsnut (25) mit einem Wendepunkt aufweist.

7. Vorrichtung nach zumindest einem der vorhergehenden Ansprüche 2 bis 6, **dadurch gekennzeichnet, dass** die, insbesondere bogenförmige, Führung eine in einer Auflage (13) für die Rahmenprofile (2, 3) vorgesehene Führungsnut (14, 15) ist, mit der wenigstens ein mit der Schweißzulage (4,5) koppelbares Führungselement (16, 17) in Eingriff bringbar ist.

8. Vorrichtung nach Anspruch 7, **dadurch gekennzeichnet, dass** das Führungselement wenigstens eine in der Führungsnut (14, 15) geführte Führungsrolle (16) aufweist.

9. Vorrichtung nach Anspruch 7 oder 8, **dadurch gekennzeichnet, dass** das Führungselement ein in der Führungsnut (14, 15) geführtes Kugellager (17) aufweist.

10. Vorrichtung nach zumindest einem der vorhergehenden Ansprüche 1 bis 9, **dadurch gekennzeichnet, dass** die Schweißzulage (4,5) in zwei voneinander beabstandeten, insbesondere bogenförmigen Führungen geführt ist.

11. Vorrichtung nach zumindest einem der vorhergehenden Ansprüche 1 bis 10, **dadurch gekennzeichnet, dass** die Anschlagleiste (7,8) mit einer Magnetverbindung an der Schweißzulage (4,5) gehalten ist, oder daß die Anschlagleiste (22,23) durch einen mechanischen Eingriff an der Schweißzulage (4,5) gehalten ist.

12. Vorrichtung nach Anspruch 6, **dadurch gekennzeichnet, dass** die Anschlagleiste (7,8,22,23) eine Anschlagkante (9) für eine Außenkante (10) eines Rahmenprofils (2, 3) und eine Begrenzungskante (11) für eine Innenkante (12) des Rahmenprofils (2, 3) aufweist.

13. Vorrichtung nach zumindest einem der vorhergehenden Ansprüche 1 bis 12, **dadurch gekennzeichnet, dass** die Anschlageinrichtung (1) ein Paar Schweißzulagen (4,5) mit zugehörigen Anschlagleisten (7,8,22,23) aufweist.

14. Vorrichtung nach zumindest einem der vorhergehenden Ansprüche 1 bis 13, **dadurch gekennzeichnet, dass** die Schweißzulagen (4,5) und die Anschlagleisten (7,8,22,23) symmetrisch zu einer Nullkante (6) angeordnet und gemeinsam einstellbar sind.

15. Vorrichtung nach Anspruch 14, **dadurch gekennzeichnet, dass** die Nullkante (6) eine Symmetrielinie bildet, zu der das Paar Schweißzulagen (4,5) mit den Anschlagleisten (7,8,22,23) symmetrisch unter einem einstellbaren Winkel (α) angeordnet ist.

16. Vorrichtung nach zumindest einem der vorhergehenden Ansprüche 1 bis 15, **dadurch gekennzeichnet, dass** eine innere Eckkante (19) der Anschlagleisten (7,8,22,23) und/oder der Schweißzulagen (4,5) entlang einer Nullkante (6) bewegbar ist.

17. Vorrichtung nach zumindest einem der vorhergehenden Ansprüche 1 bis 16, **dadurch gekennzeichnet, dass** eine Verlagerung der Anschlagleisten (7,8,22,23) durch eine Steuerkurve (25), insbesondere in einer Auflage (13) gesteuert ist.

18. Vorrichtung nach Anspruch 17, **dadurch gekennzeichnet, dass** eine Führung für eine Verlagerung der Schweißzulage (4,5) von der Steuerkurve der Anschlagleisten (7,8,22,23) verschieden ist.

19. Vorrichtung nach zumindest einem der vorhergehenden Ansprüche 1 bis 18, **dadurch gekennzeichnet, dass** in Abhängigkeit von einer Verlagerung der Schweißzulage (4,5) zwangsgesteuert eine Verlagerung der zugehörigen Anschlagleisten (7,8,22,23) erfolgt.

20. Vorrichtung nach zumindest einem der vorhergehenden Ansprüche 16 bis 19, **dadurch gekennzeichnet, dass** die Anschlagleisten (7,8,22,23) an der Null-Linie (6) aneinandergrenzen.

21. Vorrichtung nach zumindest einem der vorhergehenden Ansprüche 1 bis 20, **dadurch gekennzeichnet, dass** die Schweißzulagen (4,5) und/oder die Anschlagleisten (7,8,22,23) mehrteilig sind.

22. Vorrichtung nach zumindest einem der vorhergehenden Ansprüche 1 bis 21, **dadurch gekennzeichnet, dass** eine Winkelposition der Schweißzulage (4,5) und/oder der Anschlagleiste (7,8,22,23) mittels einer Winkelgradeinteilung (26), vorzugsweise in Verbindung mit der Auflage (13) unmittelbar ablesbar ist.

23. Vorrichtung nach Anspruch 22, **dadurch gekennzeichnet, dass** die Winkelgradeinteilung (26) benachbart zu einer äußeren Führungsnut (15) der Schweißzulage (4,5) vorgesehen und vorzugsweise zumindest teilweise von der Schweißzulage (4,5) überstrichen ist.

24. Vorrichtung nach zumindest einem der vorhergehenden Ansprüche 13 bis 23, **dadurch gekennzeichnet, dass** das Paar Schweißzulagen (4,5) zu einer opponierenden, gegenläufigen Winkelbewegung durch eine Antriebsvorrichtung gekoppelt sind.

25. Vorrichtung nach zumindest dem Oberbegriff des Anspruches 1 und/oder einem der vorhergehenden Ansprüche 1 bis 24, **dadurch gekennzeichnet, dass** eine Verschwenkung der Schweißzulage (4,5) in eine Linearbewegung eines Scheitelpunktes (Eckkanten 19) eines zwischen den Anschlagleisten (7,8,22,23) gebildeten Winkels (α) transformiert ist.
